(19) Europäisches Patentamt
European Patent Office
Office européen des brevets

(11) **EP 3 565 344 A1**

(12) **EUROPEAN PATENT APPLICATION**
published in accordance with Art. 153(4) EPC

(43) Date of publication:
**06.11.2019 Bulletin 2019/45**

(51) Int Cl.:
***H04W 72/04*** (2009.01)

(21) Application number: **17893631.6**

(86) International application number:
**PCT/CN2017/072656**

(22) Date of filing: **25.01.2017**

(87) International publication number:
**WO 2018/137188 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **LI, Zhenyu**
**Shenzhen**
**Guangdong 518129 (CN)**

• **LI, Hantao**
**Shenzhen**
**Guangdong 518129 (CN)**
• **LI, Zhijun**
**Shenzhen**
**Guangdong 518129 (CN)**

(74) Representative: **Gill Jennings & Every LLP**
**MTH**
**The Broadgate Tower**
**20 Primrose Street**
**London EC2A 2ES (GB)**

(54) **RESOURCE CONFIGURATION METHOD AND APPARATUS FOR COVERAGE ENHANCEMENT**

(57) This application discloses a resource configuration method and an apparatus for coverage enhancement, to resolve a problem that an existing PRB and TBS comparison table cannot support a code rate lower than MCS 0. The method includes: sending, by a base station, first indication information to a terminal device, where the first indication information includes a first quantity of physical resource blocks, and the physical resource block is used to carry data transmitted between the base station and the terminal device; and sending, by the base station, second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS.

FIG. 1

EP 3 565 344 A1

**Description**

**TECHNICAL FIELD**

This application relates to the field of wireless communications technologies, and in particular, to a resource configuration method and an apparatus for coverage enhancement.

**BACKGROUND**

With development of a long term evolution (Long Term Evolution, LTE) system, a licensed-assisted access using long term evolution (Licensed Assisted Access-LTE) system included in the LTE system is also widely applied, and especially an unlicensed (unlicensed) system that is independently deployed needs to be applied to many scenarios needing intensive coverage, for example, a factory, a packing port, and a warehouse. Intensive coverage can enhance coverage, expand cell coverage, reduce deployment costs of a base station, and reduce costs for building base stations by an enterprise and a factory. Frequency resource sharing is a feature of an unlicensed frequency. Because of frequency sharing, different standards and different systems can work at a same unlicensed frequency. However, to ensure that an unlicensed frequency can be used efficiently and fairly, a spectrum regulation specifies that a power spectrum of each radio transmit unit cannot exceed a threshold, for example, 10 dBm/1 MHz. Because of the limited power spectrum of the transmit unit, signal coverage of the unlicensed frequency is further limited. Therefore, there is a quite urgent demand for a coverage enhancement technology.

In the prior art, a technical means of reducing a code rate is used to implement coverage enhancement and expand coverage. Specifically, different modulation and coding scheme (Modulation and Coding Scheme, MCS) levels and quantities of physical resource blocks (Physical Resource Block, PRB) are defined in the LTE system. A base station indicates, to a terminal by using a control channel, a quantity of PRBs and an MCS level that are used. The terminal searches an MCS table to obtain a transport block size (Transport Block size, TBS) index (index), as shown in the following Table 1, and then searches the following Table 2 by using the TBS index and the quantity of PRBs, to obtain a transport block size TBS. In the prior art, a lowest code rate that can be supported is MCS 0, and a corresponding code rate is approximately 1/10 of QPSK. In a current LTE system, an adaptive modulation and coding (Adaptive Modulation and Coding, AMC) technology is mainly used to notify a change in a code rate.

In the prior art, a code rate lower than MCS 0 cannot be supported, and if a lower code rate needs to be supported, the foregoing two tables need to be modified, causing a great change in a protocol. In addition, the terminal currently supports only a TBS value that is already supported in a current 3GPP protocol, and a newly added TBS value causes hardware of the terminal to be changed.

In conclusion, how to determine a TBS value supporting a code rate lower than MCS 0, without modifying the protocol on a large scale and without changing the hardware of the terminal is a problem that needs to be resolved at present.

Table 1

| MCS index $I_{MCS}$ | Modulation order $Q_m$ | TBS index $I_{TBS}$ |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |

(continued)

| MCS index $I_{MCS}$ | Modulation order $Q_m$ | TBS index $I_{TBS}$ |
|---|---|---|
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |
| 21 | 6 | 19 |
| 22 | 6 | 20 |
| 23 | 6 | 21 |
| 24 | 6 | 22 |
| 25 | 6 | 23 |
| 26 | 6 | 24 |
| 27 | 6 | 25 |
| 28 | 6 | 26/26A |
| 29 | 2 | Reserved |
| 30 | 4 | |
| 31 | 6 | |

Table 2

| $I_{TBS}$ | $N_{PRB}$ | | | | | | | | | |
|---|---|---|---|---|---|---|---|---|---|---|
| | 1 | 2 | 3 | 4 | 5 | 6 | 7 | 8 | 9 | 10 |
| 0 | 16 | 32 | 56 | 88 | 120 | 152 | 176 | 208 | 224 | 256 |
| 1 | 24 | 56 | 88 | 144 | 176 | 208 | 224 | 256 | 328 | 344 |
| 2 | 32 | 72 | 144 | 176 | 208 | 256 | 296 | 328 | 376 | 424 |
| 3 | 40 | 104 | 176 | 208 | 256 | 328 | 392 | 440 | 504 | 568 |
| 4 | 56 | 120 | 208 | 256 | 328 | 408 | 488 | 552 | 632 | 696 |
| 5 | 72 | 144 | 224 | 328 | 424 | 504 | 600 | 680 | 776 | 872 |
| 6 | 328 | 176 | 256 | 392 | 504 | 600 | 712 | 808 | 936 | 1032 |
| 7 | 104 | 224 | 328 | 472 | 584 | 712 | 840 | 968 | 1096 | 1224 |
| 8 | 120 | 256 | 392 | 536 | 680 | 808 | 968 | 1096 | 1256 | 1384 |
| 9 | 136 | 296 | 456 | 616 | 776 | 936 | 1096 | 1256 | 1416 | 1544 |

## SUMMARY

Embodiments of this application provide a resource configuration method and an apparatus for coverage enhancement, to determine a TBS value supporting a code rate lower than MCS 0, without modifying a protocol on a large scale and without changing hardware of a terminal.

According to a first aspect, a resource configuration method for coverage enhancement is provided. The method includes: sending, by a base station, first indication information to a terminal device, where the first indication information includes a first quantity of physical resource blocks, and the physical resource block is used to carry data transmitted between the base station and the terminal device; and sending, by the base station, second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.

In this embodiment of the present invention, a sequence of sending the first indication message and the second indication message is not limited.

In a possible design, the base station sends first signaling to the terminal, where the first signaling is used to instruct the terminal to enter a coverage enhancement mode; the base station sends, to the terminal, a physical resource block PRB conversion coefficient and a first quantity of PRBs that are actually occupied and allocated to the terminal, where the PRB conversion coefficient corresponds to a coverage level of the terminal, and the conversion coefficient is less than or equal to 1; the base station determines, based on the PRB conversion coefficient and the first quantity of PRBs, the second quantity of PRBs that is used to query a PRB and transport block size TBS comparison table during the data transmission; the base station determines, based on the PRB and TBS comparison table, a TBS value corresponding to the second quantity of PRBs; and the base station performs data transmission based on the TBS value.

In this embodiment of this application, after entering the coverage enhancement mode, the terminal performs data transmission by using a low code rate, thereby expanding coverage, where a lower code rate corresponds to a larger first quantity of PRBs. The terminal converts, by using the PRB conversion coefficient, a corresponding first quantity of PRBs that are actually occupied when the low code rate is used, into a quantity of PRBs that is in the PRB and TBS comparison table, and then determines a TBS value by querying the table. According to the method, a minor change is made to a protocol, and hardware of the terminal does not need to be changed.

In a possible design, the first parameter corresponds to a coverage level of the terminal device.

In a possible design, after the sending, by the base station, second indication information to the terminal device, the method further includes: determining, by the base station, the transport block size TBS based on the second quantity of physical resource blocks; and sending, by the base station, data to the terminal device based on the TBS.

In a possible design, after the sending, by the base station, second indication information to the terminal device, the method further includes: determining, by the base station, the transport block size TBS based on the second quantity of physical resource blocks; and receiving, by the base station, data from the terminal device based on the TBS.

In a possible design, before the sending, by a base station, first indication information to a terminal device, the method further includes: determining, by the base station, a coverage level corresponding to the terminal device, which specifically includes:

determining, by the base station through measurement or based on a capability reported by the terminal device or based on signaling reported by the terminal device, the coverage level corresponding to the terminal device.

In a possible design, the sending, by the base station, second indication information to the terminal device includes:

sending, by the base station, the second indication information to the terminal through a physical downlink control channel PDCCH or an enhanced physical downlink control channel ePDCCH.

In a possible design, before the sending, by the base station, first signaling to the terminal, the method further includes:

determining, by the base station based on measurement, or by using a capability reported by the terminal, or by using signaling reported by the terminal, a coverage level corresponding to the terminal, where the signaling reported by the terminal includes, but is not limited to, an SR message, a MAC CE message, an RRC message, and a PRACH notification.

The sending, by the base station, a PRB conversion coefficient to the terminal includes:

sending, by the base station to the terminal based on the coverage level of the terminal, a PRB conversion coefficient corresponding to the coverage level of the terminal.

In a possible design, the sending, by the base station, a PRB conversion coefficient to the terminal includes:

sending, by the base station, the PRB conversion coefficient to the terminal by using second signaling; or
sending, by the base station, the PRB conversion coefficient to the terminal through a physical downlink control channel PDCCH or an ePDCCH.

In a possible design, the performing, by the base station, data transmission based on the TBS value includes:
performing, by the base station, uplink data demodulation or downlink data sending based on the TBS value.

According to a second aspect, a resource configuration method for coverage enhancement is provided. The method includes: receiving, by a terminal device, first indication information and second indication information from a base station, where the first indication information includes a first quantity of physical resource blocks, the physical resource block is used to carry data transmitted between the base station and the terminal device, and the second indication information carries a first parameter; determining, by the terminal device, a second quantity of physical resource blocks based on the first parameter and the first quantity of physical resource blocks; and determining, by the terminal device, a transport block size TBS based on the second quantity of physical resource blocks, where the first parameter is less than or equal to 1.

In a possible design, the terminal switches to a coverage enhancement mode when receiving first signaling sent by the base station, where the first signaling is used to instruct the terminal to enter the coverage enhancement mode; the terminal receives a first quantity of PRBs that are actually occupied and allocated to the terminal and a physical resource block PRB conversion coefficient that are sent by the base station, where the PRB conversion coefficient corresponds to a coverage level of the terminal, and the conversion coefficient is less than or equal to 1; the terminal determines, when performing data transmission and based on the first quantity of PRBs and the PRB conversion coefficient that are sent by the base station, the second quantity of PRBs that is used to query a PRB and transport block size TBS comparison table during the data transmission; the terminal determines, based on the PRB and TBS comparison table, a TBS value corresponding to the second quantity of PRBs; and the terminal performs the data transmission based on the TBS value, where the data transmission includes uplink data demodulation or downlink data sending.

In this embodiment of this application, after entering the coverage enhancement mode, the terminal performs data transmission by using a low code rate, thereby expanding coverage, where a lower code rate corresponds to a larger first quantity of PRBs. The terminal converts, by using the PRB conversion coefficient, a corresponding first quantity of PRBs that are actually occupied when the low code rate is used, into a quantity of PRBs that is in the PRB and TBS comparison table, and then determines a TBS value by querying the table. According to the method, a minor change is made to a protocol, and hardware of the terminal does not need to be changed.

In a possible design, the first parameter corresponds to a coverage level of the terminal device.

In a possible design, the terminal device receives data from the base station based on the TBS.

In a possible design, the terminal device sends data to the base station based on the TBS.

In a possible design, the determining, by the terminal device, a second quantity of physical resource blocks based on the first parameter and the first quantity of physical resource blocks includes: determining, by the terminal device, a product of the first parameter and the first quantity of physical resource blocks, as the second quantity of physical resource blocks.

In a possible design, before the receiving, by a terminal device, first indication information and second indication information from a base station, the method further includes: notifying, by the terminal device in any one of the following manners, the base station of a coverage level supported by the terminal device:

through capability reporting;
by using a physical random access channel PRACH;
by using a scheduling request SR;
by using a Media Access Control control element MAC CE; and
by using other Radio Resource Control RRC signaling; and
determining, by the terminal device, a first parameter set based on the coverage level, to be reported to the base station, where the first parameter set includes the first parameter.

In a possible design, the receiving, by a terminal device, second indication information from a base station includes: receiving, by the terminal, the second indication information that is sent by the base station through a physical downlink control channel PDCCH or an enhanced physical downlink control channel ePDCCH.

In a possible design, after entering the enhancement mode, the terminal queries the PRB and TBS comparison table by using a specified quantity of PRBs, to determine a TBS value corresponding to the specified quantity of PRBs.

In this embodiment of this application, the specified quantity of PRBs is irrelevant to the first quantity of PRBs that are actually occupied and allocated by the base station to the terminal; the specified quantity of PRBs may be fixed in a protocol, or may be notified by the base station in a broadcast manner or sent by the base station by using UE-specific Radio Resource Control (Radio Resource Control, RRC) signaling; and the specified quantity of PRBs may be adjusted based on a traffic condition of UE.

In a possible design, the determining, by the terminal when performing data transmission and based on the first quantity of PRBs and the PRB conversion coefficient that are sent by the base station, the second quantity of PRBs that is used to query a PRB and transport block size TBS comparison table during the data transmission includes: when performing the data transmission, determining, by the terminal, a product of the PRB conversion coefficient and the first quantity of PRBs as the second quantity of PRBs that is used to query the PRB and TBS comparison table during the data transmission.

In a possible design, before the receiving, by the terminal, first signaling sent by the base station, the method further includes:

notifying, by the terminal through capability reporting or by using a physical random access channel PRACH or by using a scheduling request (Scheduling Request, SR) or by using a Media Access Control control element (Medium Access Control Control Element, MAC CE) or by using other RRC signaling, the base station of a coverage level supported by the terminal; and
before the receiving, by the terminal, a physical resource block PRB conversion coefficient sent by the base station, the method further includes:
selecting, by the terminal, a specified conversion coefficient set based on the coverage level of the terminal, to be reported to the base station, where the conversion coefficient set is used by the base station to select any conversion coefficient from the conversion coefficient set, to be sent to the terminal.

In this embodiment of this application, there are a plurality of specified conversion coefficient sets, a corresponding conversion coefficient set is reported to the base station based on the coverage level of the terminal, and the base station selects a conversion coefficient from the conversion coefficient set, so that a quantity of bits of an instruction that is delivered through the PDCCH can be reduced.

In a possible design, the receiving, by the terminal, a PRB conversion coefficient sent by the base station includes:

receiving, by the terminal, the PRB conversion coefficient that is sent by the base station by using second signaling; or
receiving, by the terminal, the PRB conversion coefficient that is sent by the base station through a physical downlink control channel PDCCH or an enhanced physical downlink control channel (Enhanced PDCCH, ePDCCH).

According to a third aspect, a base station is provided. The base station includes: a first sending module, configured to send first indication information to a terminal device, where the first indication information includes a first quantity of physical resource blocks, and the physical resource block is used to carry data transmitted between the base station in which the first sending module is located and the terminal device; and a second sending module, configured to send second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.

In a possible design, the first parameter corresponds to a coverage level of the terminal device.

In a possible design, the base station further includes: a processing module, configured to determine the transport block size TBS based on the second quantity of physical resource blocks, where the processing module is further configured to send data to the terminal device based on the TBS.

In a possible design, the base station further includes: the processing module, further configured to determine the transport block size TBS based on the second quantity of physical resource blocks, where the processing module is further configured to receive data from the terminal device based on the TBS.

In a possible design, the base station further includes: a determining module, configured to determine a coverage level corresponding to the terminal device, which specifically includes:
determining, through measurement or based on a capability reported by the terminal device or based on signaling reported by the terminal device, the coverage level corresponding to the terminal device.

In a possible design, the second sending module is specifically configured to send the second indication information to the terminal through a physical downlink control channel PDCCH or an enhanced physical downlink control channel ePDCCH.

According to a fourth aspect, a terminal device is provided. The terminal device includes:

a receiving module, configured to receive first indication information and second indication information from a base station, where the first indication information includes a first quantity of physical resource blocks, the physical resource block is used to carry data transmitted between the base station and the terminal device, and the second indication information carries a first parameter; and
a determining module, configured to determine a second quantity of physical resource blocks based on the first parameter and the first quantity of physical resource blocks, where
the determining module is further configured to determine a transport block size TBS based on the second quantity of physical resource blocks, where the first parameter is less than or equal to 1.

In a possible design, the first parameter corresponds to a coverage level of the terminal device.

In a possible design, the receiving module is further configured to receive data from the base station based on the TBS.

In a possible design, the determining module is further configured to send data to the base station based on the TBS.

In a possible design, the determining module is specifically configured to determine a product of the first parameter and the first quantity of physical resource blocks, as the second quantity of physical resource blocks.

In a possible design, the terminal device further includes: a processing module, configured to: notify, in any one of the following manners, the base station of a coverage level supported by the terminal device:

through capability reporting;
by using a physical random access channel PRACH;
by using a scheduling request SR;
by using a Media Access Control control element MAC CE; and
by using other Radio Resource Control RRC signaling; and
determine a first parameter set based on the coverage level, to be reported to the base station, where the first parameter set includes the first parameter.

In a possible design, the receiving module is specifically configured to receive the second indication information that is sent by the base station through a physical downlink control channel PDCCH or an enhanced physical downlink control channel ePDCCH.

According to a fifth aspect, a base station is provided. The base station includes a transceiver and at least one processor connected to the transceiver, where

the processor is configured to read a program in a memory, to perform the following process:

sending, by a base station, first indication information to a terminal device, where the first indication information includes a first quantity of physical resource blocks, and the physical resource block is used to carry data transmitted between the base station and the terminal device; and sending, by the base station, second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.

According to a sixth aspect, a terminal is provided. The terminal includes a transceiver and at least one processor connected to the transceiver, where

the terminal device receives first indication information and second indication information from a base station, where the first indication information includes a first quantity of physical resource blocks, the physical resource block is used to carry data transmitted between the base station and the terminal device, and the second indication information carries a first parameter; the terminal device determines a second quantity of physical resource blocks based on the first parameter and the first quantity of physical resource blocks; and the terminal device determines a transport block size TBS based on the second quantity of physical resource blocks, where the first parameter is less than or equal to 1.

The embodiments of this application provide the resource configuration method and the apparatus for coverage enhancement. The base station sends the first indication information to the terminal device, where the first indication information includes the first quantity of physical resource blocks, and the physical resource block is used to carry the data transmitted between the base station and the terminal device; and the base station sends the second indication information to the terminal device, where the second indication information carries the first parameter, the first parameter is used by the terminal device to determine the second quantity of physical resource blocks based on the first parameter and the first quantity of physical resource blocks, and the second quantity of physical resource blocks is used to determine the transport block size TBS, where the first parameter is less than or equal to 1. The TBS value supporting the code rate lower than MCS 0 is determined, without modifying the protocol on a large scale and without changing the hardware of the terminal, thereby implementing coverage enhancement and expanding coverage.

**DESCRIPTION OF DRAWINGS**

FIG. 1 is a flowchart of a resource configuration method for coverage enhancement according to an embodiment of this application;
FIG. 2 is a flowchart of a resource configuration method for coverage enhancement according to an embodiment of this application;
FIG. 3 is a flowchart of another resource configuration method for coverage enhancement according to an embodiment of this application;

FIG. 4 is a flowchart of a resource configuration method for coverage enhancement according to an embodiment of this application;

FIG. 5A and FIG. 5B are a flowchart of still another resource configuration method for coverage enhancement according to an embodiment of this application;

FIG. 6 is a schematic diagram of a base station according to an embodiment of this application;

FIG. 7 is a schematic diagram of a terminal according to an embodiment of this application;

FIG. 8 is a schematic diagram of a hardware structure of a base station according to an embodiment of this application; and

FIG. 9 is a schematic diagram of a hardware structure of a terminal according to an embodiment of this application.

## DESCRIPTION OF EMBODIMENTS

The following further describes in detail the embodiments of this application with reference to accompanying drawings.

It should be understood that, in the descriptions of this application, terms such as "first" and "second" are merely used for a purpose of distinguishing for description, and should not be construed as indicating or implying relative importance, nor as indicating or implying a sequence.

In a wireless communications system, especially in a scenario of deploying LAA-LTE and unlicensed systems, a code rate needs to be reduced to implement intensive coverage and expand coverage. An MCS level is inversely proportional to a quantity of PRBs, and a lower required MCS indicates a larger quantity of PRBs. In a PRB and TBS comparison table, values of both a PRB and a TBS are fixed. To not change a PRB and TBS comparison table in a protocol or a structure of a terminal, a method is required, to determine a TBS value when a quantity of PRBs is a value that does not exist in the PRB and TBS comparison table. In the embodiments of the present invention, user equipment may include a terminal, a relay device, or another device that can perform data communication with a base station.

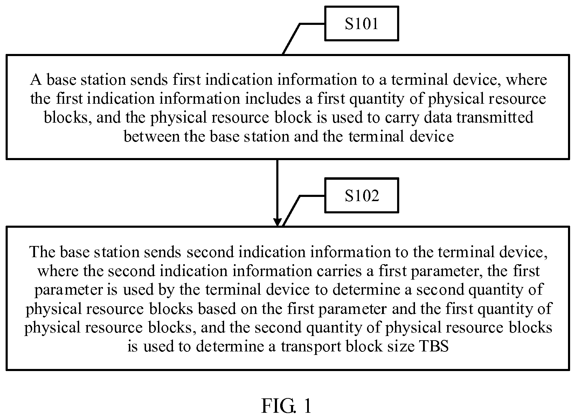

An embodiment of this application provides a resource configuration method for coverage enhancement. As shown in FIG. 1, the method includes the following process:

Step 101: A base station sends first indication information to a terminal device, where the first indication information includes a first quantity of physical resource blocks, and the physical resource block is used to carry data transmitted between the base station and the terminal device.

Step 102: The base station sends second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.

In this embodiment of this application, after entering a coverage enhancement mode, the terminal performs data transmission by using a low code rate, thereby expanding coverage, where a lower code rate corresponds to a larger first quantity of physical resource blocks; and converts, by using the first parameter, a corresponding first quantity of physical resource blocks that are actually occupied when the low code rate is used, into a second quantity of physical resource blocks, and then determines a TBS value by querying the table, without greatly changing a protocol and without modifying hardware of the terminal.

It should be noted that, in the foregoing embodiment of this application, the first parameter may be selected or determined based on an actual data transmission requirement, to implement coverage enhancement. For example, the first parameter may be a PRB conversion coefficient. For the PRB conversion coefficient, refer to descriptions in the following embodiment.

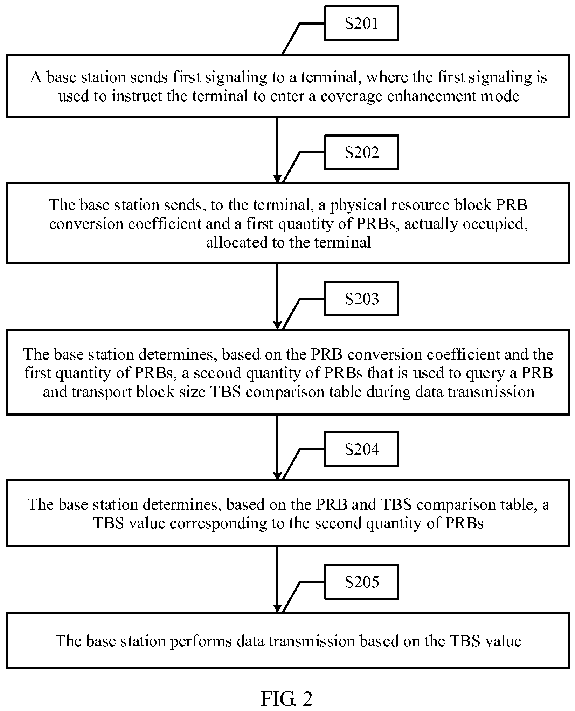

An embodiment of this application further provides a resource configuration method for coverage enhancement. As shown in FIG. 2, the method includes the following process:

Step 201: A base station sends first signaling to a terminal, where the first signaling is used to instruct the terminal to enter a coverage enhancement mode.

Step 202: The base station sends, to the terminal, a physical resource block PRB conversion coefficient and a first quantity of PRBs that are actually occupied and allocated to the terminal, where the PRB conversion coefficient corresponds to a coverage level of the terminal, and the conversion coefficient is less than or equal to 1.

Specifically, the base station sends the PRB conversion coefficient to the terminal by using second signaling; or the base station sends the PRB conversion coefficient to the terminal through a physical downlink control channel PDCCH or an ePDCCH.

Step 203: The base station determines, based on the PRB conversion coefficient and the first quantity of PRBs, a second quantity of PRBs that is used to query a PRB and transport block size TBS comparison table during the data transmission.
Step 204: The base station determines, based on the PRB and TBS comparison table, a TBS value corresponding to the second quantity of PRBs.
Step 205: The base station performs data transmission based on the TBS value.

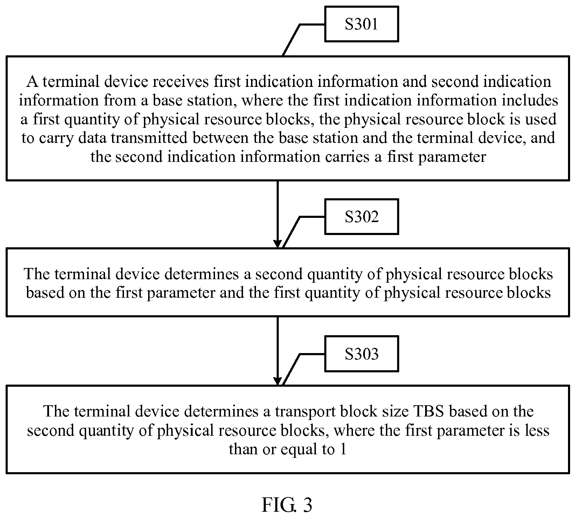

Specifically, the data transmission includes uplink data demodulation or downlink data sending.
In this embodiment of the present invention, before step 201, the method further includes: determining, by the base station based on measurement, or by using a capability reported by the terminal, or by using signaling reported by the terminal, a coverage level corresponding to the terminal; and the sending, by the base station, a PRB conversion coefficient to the terminal includes: sending, by the base station to the terminal based on the coverage level of the terminal, a PRB conversion coefficient corresponding to the coverage level of the terminal.
An embodiment of this application provides a resource configuration method for coverage enhancement. As shown in FIG. 3, the method includes the following process:

Step 301: A terminal device receives first indication information and second indication information from a base station, where the first indication information includes a first quantity of physical resource blocks, the physical resource block is used to carry data transmitted between the base station and the terminal device, and the second indication information carries a first parameter.
Step 302: The terminal device determines a second quantity of physical resource blocks based on the first parameter and the first quantity of physical resource blocks.
Step 303: The terminal device determines a transport block size TBS based on the second quantity of physical resource blocks, where the first parameter is less than or equal to 1.

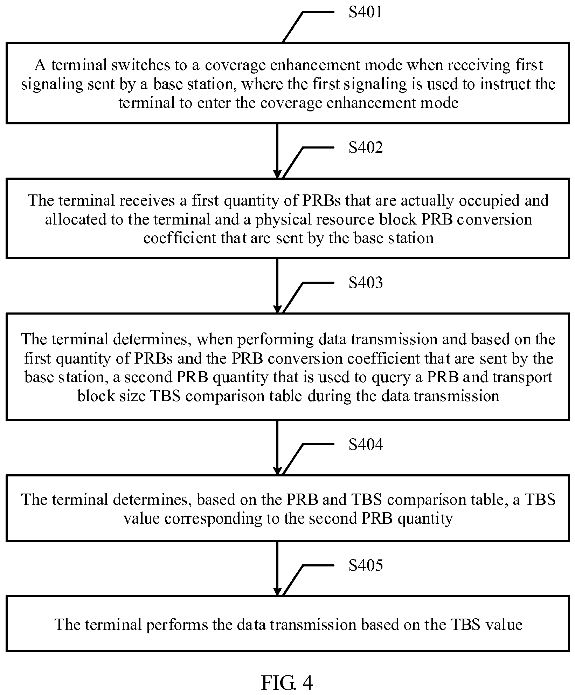

It should be noted that, in the foregoing embodiment of this application, the first parameter may be selected or determined based on an actual data transmission requirement, to implement coverage enhancement. For example, the first parameter may be a PRB conversion coefficient. For the PRB conversion coefficient, refer to descriptions in another embodiment of the present invention.
An embodiment of this application provides a resource configuration method for coverage enhancement. As shown in FIG. 4, the method includes the following process.

Step 401: A terminal switches to a coverage enhancement mode when receiving first signaling sent by a base station, where the first signaling is used to instruct the terminal to enter the coverage enhancement mode.
Step 402: The terminal receives a first quantity of PRBs that are actually occupied and allocated to the terminal and a physical resource block PRB conversion coefficient that are sent by the base station, where the PRB conversion coefficient corresponds to a coverage level of the terminal, and the conversion coefficient is less than or equal to 1.

Specifically, the terminal receives the PRB conversion coefficient that is sent by the base station by using second signaling; or the terminal receives the PRB conversion coefficient that is sent by the base station through a physical downlink control channel PDCCH or an ePDCCH.
Step 403: The terminal determines, when performing data transmission and based on the first quantity of PRBs and the PRB conversion coefficient that are sent by the base station, a second quantity of PRBs that is used to query a PRB and transport block size TBS comparison table during the data transmission.
Specifically, when performing the data transmission, the terminal determines a product of the PRB conversion coefficient and the first quantity of PRBs as the second quantity of PRBs that is used to query the PRB and TBS comparison table during the data transmission.
An example is used for description: Assuming that $N'_{PRB}$ represents the first quantity of PRBs, and $N_{PRB}$ represents the second quantity of PRBs, a calculation formula of the second PRB is as follows:

$$N_{PRB} = \max\{\text{Floor}(N'_{PRB} \times \text{alpha}), 1\}$$

where *alpha* represents the conversion coefficient.

Step 404: The terminal determines, based on the PRB and TBS comparison table, a TBS value corresponding to the second quantity of PRBs.
Step 405: The terminal performs the data transmission based on the TBS value.

Specifically, the data transmission includes uplink data demodulation or downlink data sending.

In this embodiment of this application, after entering the coverage enhancement mode, the terminal performs data transmission by using a low code rate, thereby expanding coverage, where a lower code rate corresponds to a larger first quantity of PRBs. The terminal converts, by using the PRB conversion coefficient, a corresponding first quantity of PRBs that are actually occupied when the low code rate is used, into a quantity of PRBs that is in the PRB and TBS comparison table, and then determines a TBS value by querying the table, without greatly changing a protocol and without modifying hardware of the terminal.

In this embodiment of the present invention, before step 101, the method further includes: notifying, by the terminal through capability reporting or by using a physical random access channel PRACH or by using an SR or by using a MAC CE or by using other RRC signaling, the base station of a coverage level supported by the terminal; and before the receiving, by the terminal, a physical resource block PRB conversion coefficient sent by the base station, the method further includes: selecting, by the terminal, a specified conversion coefficient set based on the coverage level of the terminal, and reporting the specified conversion coefficient set to the base station, where the conversion coefficient set is used by the base station to select any conversion coefficient from the conversion coefficient set, and send the any conversion coefficient sent to the terminal.

An example is used for description: The conversion coefficient set may be (1/8, 1/4, 1/2, 1), and there may be another value in the set. This is not limited in this embodiment of the present invention. The base station instructs, by using signaling, the terminal to use the conversion coefficient alpha when the terminal determines the TBS. An alpha value may be identified by using two bits (bit) in signaling that is delivered by the base station through the PDCCH, as shown in the following Table 3:

Table 3

| Bit information | Alpha value |
|---|---|
| 00 | 1 |
| 01 | 1/2 |
| 10 | 1/4 |
| 11 | 1/8 |

Optionally, the base station may use a newly added field or a reserved field that are of the PDCCH to distinguish whether a PDSCH needs to be converted by using the PRB conversion coefficient. Assuming that a modulation scheme in a case of enhanced coverage is quadrature phase shift keying (Quadrature Phase Shift Keying, QPSK), a bit quantity of an MCS may be changed from five bits to three bits, and remaining two bits may be used to indicate the conversion coefficient. Alternatively, the conversion coefficient alpha value may be indicated by using higher layer signaling, or a fixed value, for example, 0.5 is specified in a protocol. Alternatively, a conversion coefficient set is configured by using signaling, and a conversion coefficient is selected from the set by using the PDCCH.

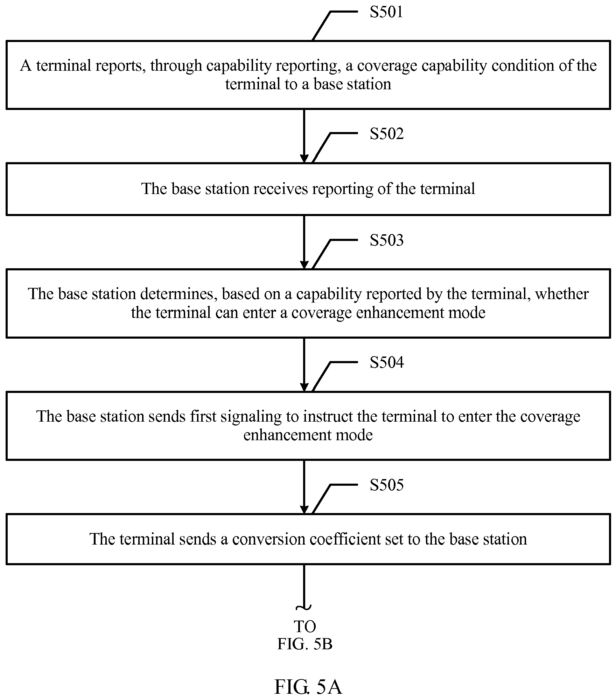

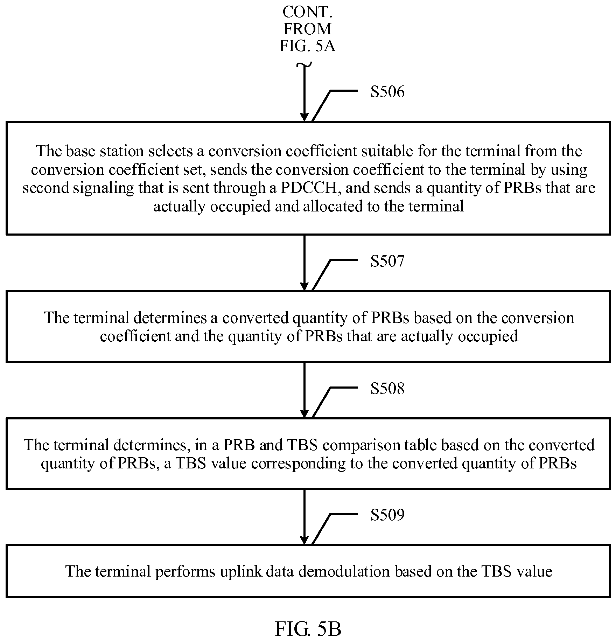

One of the resource configuration methods for coverage enhancement is described in detail below by using a specific embodiment. As shown in FIG. 5A and FIG. 5B, a process is as follows:

Step 501: A terminal reports, through capability reporting, a coverage capability condition of the terminal to a base station.
Step 502: The base station receives reporting of the terminal.
Step 503: The base station determines, based on a capability reported by the terminal, whether the terminal can enter a coverage enhancement mode.
Step 504: The base station sends first signaling to instruct the terminal to enter the coverage enhancement mode.
Step 505: The terminal sends a conversion coefficient set to the base station.
Step 506: The base station selects a conversion coefficient suitable for the terminal from the conversion coefficient set, sends the conversion coefficient to the terminal by using second signaling that is sent through a PDCCH, and sends a quantity of PRBs that are actually occupied and allocated to the terminal.
Step 507: The terminal determines a converted PRB based on the conversion coefficient and the quantity of PRBs that are actually occupied.
Step 508: The terminal determines, in a PRB and TBS comparison table based on the converted quantity of PRBs, a TBS value corresponding to the converted quantity of PRBs.
Step 509: The terminal performs uplink data demodulation based on the TBS value.

The embodiments of this application provide a resource configuration method and an apparatus for coverage enhancement, to resolve a prior-art problem that a TBS value supporting a code rate lower than MCS 0 cannot be determined without modifying a protocol and without changing hardware of a terminal. The method and the apparatus are based on a same invention idea. Because problem resolving principles of the method and the apparatus are similar, for implementation of the apparatus and the method, refer to each other. Repeated parts are not described in detail again.

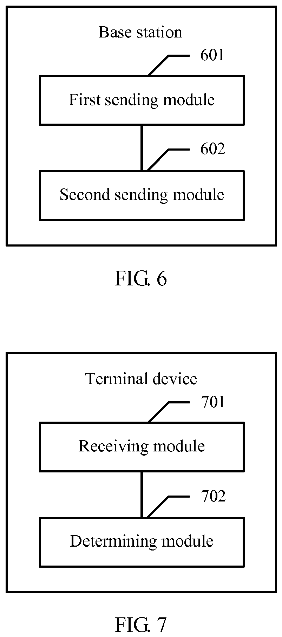

Based on a same invention idea, an embodiment of the present invention provides a terminal. As shown in FIG. 6, the base station includes:

a first sending module 601, configured to send first indication information to a terminal device, where the first indication information includes a first quantity of physical resource blocks, and the physical resource block is used to carry data transmitted between the base station in which the first sending module is located and the terminal device; and
a second sending module 602, configured to send second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.

Based on a same invention idea, an embodiment of the present invention provides a terminal device. As shown in FIG. 7, the terminal device includes:

a receiving module 701, configured to receive first indication information and second indication information from a base station, where the first indication information includes a first quantity of physical resource blocks, the physical resource block is used to carry data transmitted between the base station and the terminal device, and the second indication information carries a first parameter; and
a determining module 702, configured to determine a second quantity of physical resource blocks based on the first parameter and the first quantity of physical resource blocks, where
the determining module 702 is further configured to determine a transport block size TBS based on the second quantity of physical resource blocks, where the first parameter is less than or equal to 1.

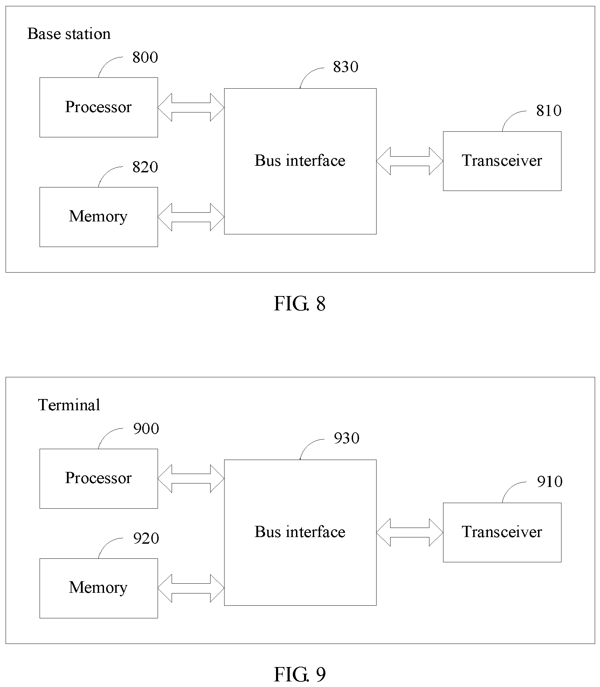

Based on a same invention idea, an embodiment of the present invention provides a base station. As shown in FIG. 8, the base station includes:
In the embodiment in FIG. 8, the base station includes a transceiver 810 and at least one processor 800 connected to the transceiver 810.
The processor 800 is configured to read a program in a memory 820, to perform the following process:
sending, by the base station, first indication information to a terminal device, where the first indication information includes a first quantity of physical resource blocks, and the physical resource block is used to carry data transmitted between the base station and the terminal device; and sending, by the base station, second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, where the first parameter is less than or equal to 1.
In FIG. 8, a bus architecture may include any quantity of interconnected buses and bridges, and specifically links various circuits of one or more processors represented by the processor 800 and a memory represented by the memory 820. The bus architecture may further link various other circuits such as a peripheral device, a voltage regulator, and a power management circuit. These are well known in the art, and therefore are not further described in this specification. A bus interface provides an interface. The transceiver 810 may be a plurality of components. To be specific, the transceiver 810 includes a transmitter and a receiver, and provides a unit configured to communicate with various other apparatuses on a transmission medium. The processor 800 is responsible for managing the bus architecture and general processing, and the memory 820 may store data used when the processor 800 performs an operation.
It may be understood that, the processor 800 controls the transceiver 810 to exchange air interface information between the base station and the terminal.
Based on a same invention idea, an embodiment of the present invention provides a terminal device. In the embodiment in FIG. 9, the terminal device includes a transceiver 910 and at least one processor 900 connected to the transceiver 910.

The processor 900 is configured to read a program in a memory 920, to perform the following process: receiving, by the terminal device, first indication information and second indication information from a base station, where the first indication information includes a first quantity of physical resource blocks, the physical resource block is used to carry data transmitted between the base station and the terminal device, and the second indication information carries a first parameter; determining, by the terminal device, a second quantity of physical resource blocks based on the first parameter and the first quantity of physical resource blocks; and determining, by the terminal device, a transport block size TBS based on the second quantity of physical resource blocks, where the first parameter is less than or equal to 1.

In FIG. 9, a bus architecture may include any quantity of interconnected buses and bridges, and specifically links various circuits of one or more processors represented by the processor 900 and a memory represented by the memory 920. The bus architecture may further link various other circuits such as a peripheral device, a voltage regulator, and a power management circuit. These are well known in the art, and therefore are not further described in this specification. A bus interface 930 provides an interface. The transceiver 910 may be a plurality of components. To be specific, the transceiver 910 includes a transmitter and a receiver, and provides a unit configured to communicate with various other apparatuses on a transmission medium. The processor 900 is responsible for managing the bus architecture and general processing, and the memory 920 may store data used when the processor 900 performs an operation.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to the embodiments of this application without departing from the spirit and scope of the embodiments of this application. This application is intended to cover these modifications and variations provided that they fall within the scope of protection defined by the following claims and their equivalent technologies.

**Claims**

1. A resource configuration method for coverage enhancement, wherein the method comprises:

   sending, by a base station, first indication information to a terminal device, wherein the first indication information comprises a first quantity of physical resource blocks, and the physical resource block is used to carry data transmitted between the base station and the terminal device; and
   sending, by the base station, second indication information to the terminal device, wherein the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, wherein

the first parameter is less than or equal to 1.

2. The method according to claim 1, wherein the first parameter corresponds to a coverage level of the terminal device.

3. The method according to claim 1, wherein after the sending, by the base station, second indication information to the terminal device, the method further comprises:

determining, by the base station, the transport block size TBS based on the second quantity of physical resource blocks; and
sending, by the base station, data to the terminal device based on the TBS.

4. The method according to claim 1, wherein after the sending, by the base station, second indication information to the terminal device, the method further comprises:

determining, by the base station, the transport block size TBS based on the second quantity of physical resource blocks; and
receiving, by the base station, data from the terminal device based on the TBS.

5. The method according to claim 1, wherein before the sending, by a base station, first indication information to a terminal device, the method further comprises:
determining, by the base station, a coverage level corresponding to the terminal device, which specifically comprises:
determining, by the base station through measurement or based on a capability reported by the terminal device or based on signaling reported by the terminal device, the coverage level corresponding to the terminal device.

6. The method according to claim 1, wherein the sending, by the base station, second indication information to the terminal device comprises:
sending, by the base station, the second indication information to the terminal through a physical downlink control channel PDCCH or an enhanced physical downlink control channel ePDCCH.

7. A resource configuration method for coverage enhancement, wherein the method comprises:

receiving, by a terminal device, first indication information and second indication information from a base station, wherein the first indication information comprises a first quantity of physical resource blocks, the physical resource block is used to carry data transmitted between the base station and the terminal device, and the second indication information carries a first parameter;
determining, by the terminal device, a second quantity of physical resource blocks based on the first parameter and the first quantity of physical resource blocks; and
determining, by the terminal device, a transport block size TBS based on the second quantity of physical resource blocks, wherein
the first parameter is less than or equal to 1.

8. The method according to claim 7, wherein the first parameter corresponds to a coverage level of the terminal device.

9. The method according to claim 7, wherein the terminal device receives data from the base station based on the TBS.

10. The method according to claim 7, wherein the terminal device sends data to the base station based on the TBS.

11. The method according to claim 7, wherein the determining, by the terminal device, a second quantity of physical resource blocks based on the first parameter and the first quantity of physical resource blocks comprises:
determining, by the terminal device, a product of the first parameter and the first quantity of physical resource blocks, as the second quantity of physical resource blocks.

12. The method according to claim 7, wherein before the receiving, by a terminal device, first indication information and second indication information from a base station, the method further comprises:

notifying, by the terminal device in any one of the following manners, the base station of a coverage level supported by the terminal device:

through capability reporting;
by using a physical random access channel PRACH;
by using a scheduling request SR;
by using a Media Access Control control element MAC CE; and
by using other Radio Resource Control RRC signaling; and

determining, by the terminal device, a first parameter set based on the coverage level, to be reported to the base station, wherein the first parameter set comprises the first parameter.

**13.** The method according to claim 7, wherein the receiving, by a terminal device, second indication information from a base station comprises:
receiving, by the terminal, the second indication information that is sent by the base station through a physical downlink control channel PDCCH or an enhanced physical downlink control channel ePDCCH.

**14.** Abase station, wherein the base station comprises:

a first sending module, configured to send first indication information to a terminal device, wherein the first indication information comprises a first quantity of physical resource blocks, and the physical resource block is used to carry data transmitted between the base station in which the first sending module is located and the terminal device; and
a second sending module, configured to send second indication information to the terminal device, wherein the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS, wherein
the first parameter is less than or equal to 1.

**15.** The base station according to claim 14, wherein the first parameter corresponds to a coverage level of the terminal device.

**16.** The base station according to claim 14, wherein the base station further comprises:

a processing module, configured to determine the transport block size TBS based on the second quantity of physical resource blocks, wherein
the processing module is further configured to send data to the terminal device based on the TBS.

**17.** The base station according to claim 14, wherein the base station further comprises:

the processing module, further configured to determine the transport block size TBS based on the second quantity of physical resource blocks, wherein
the processing module is further configured to receive data from the terminal device based on the TBS.

**18.** The base station according to claim 14, wherein the base station further comprises:
a determining module, configured to determine a coverage level corresponding to the terminal device, which specifically comprises:
determining, through measurement or based on a capability reported by the terminal device or based on signaling reported by the terminal device, the coverage level corresponding to the terminal device.

**19.** The base station according to claim 14, wherein the second sending module is specifically configured to:
send the second indication information to the terminal through a physical downlink control channel PDCCH or an enhanced physical downlink control channel ePDCCH.

**20.** A terminal device, wherein the terminal device comprises:

a receiving module, configured to receive first indication information and second indication information from a base station, wherein the first indication information comprises a first quantity of physical resource blocks, the physical resource block is used to carry data transmitted between the base station and the terminal device, and the second indication information carries a first parameter; and

a determining module, configured to determine a second quantity of physical resource blocks based on the first parameter and the first quantity of physical resource blocks, wherein
the determining module is further configured to determine a transport block size TBS based on the second quantity of physical resource blocks, wherein the first parameter is less than or equal to 1.

21. The terminal device according to claim 20, wherein the first parameter corresponds to a coverage level of the terminal device.

22. The terminal device according to claim 20, wherein the receiving module is further configured to receive data from the base station based on the TBS.

23. The terminal device according to claim 20, wherein the determining module is further configured to send data to the base station based on the TBS.

24. The terminal device according to claim 20, wherein the determining module is specifically configured to:
determine a product of the first parameter and the first quantity of physical resource blocks, as the second quantity of physical resource blocks.

25. The terminal device according to claim 20, wherein the terminal device further comprises:

a processing module, configured to: notify, in any one of the following manners, the base station of a coverage level supported by the terminal device:

through capability reporting;
by using a physical random access channel PRACH;
by using a scheduling request SR;
by using a Media Access Control control element MAC CE; and
by using other Radio Resource Control RRC signaling; and

determine a first parameter set based on the coverage level, to be reported to the base station, wherein the first parameter set comprises the first parameter.

26. The terminal device according to claim 20, wherein the receiving module is specifically configured to:
receive the second indication information that is sent by the base station through a physical downlink control channel PDCCH or an enhanced physical downlink control channel ePDCCH.

S101

A base station sends first indication information to a terminal device, where the first indication information includes a first quantity of physical resource blocks, and the physical resource block is used to carry data transmitted between the base station and the terminal device

S102

The base station sends second indication information to the terminal device, where the second indication information carries a first parameter, the first parameter is used by the terminal device to determine a second quantity of physical resource blocks based on the first parameter and the first quantity of physical resource blocks, and the second quantity of physical resource blocks is used to determine a transport block size TBS

FIG. 1

S201

A base station sends first signaling to a terminal, where the first signaling is used to instruct the terminal to enter a coverage enhancement mode

S202

The base station sends, to the terminal, a physical resource block PRB conversion coefficient and a first quantity of PRBs, actually occupied, allocated to the terminal

S203

The base station determines, based on the PRB conversion coefficient and the first quantity of PRBs, a second quantity of PRBs that is used to query a PRB and transport block size TBS comparison table during data transmission

S204

The base station determines, based on the PRB and TBS comparison table, a TBS value corresponding to the second quantity of PRBs

S205

The base station performs data transmission based on the TBS value

FIG. 2

```
                                    ┌──────────┐
                                   ╱│  S301    │
                                  ╱ └──────────┘
┌──────────────────────────────────────────────────────────────────┐
│   A terminal device receives first indication information and second indication │
│ information from a base station, where the first indication information includes │
│ a first quantity of physical resource blocks, the physical resource block is used │
│ to carry data transmitted between the base station and the terminal device, and │
│          the second indication information carries a first parameter          │
└──────────────────────────────────────────────────────────────────┘
                                    ┌──────────┐
                                   ╱│  S302    │
                                  ╱ └──────────┘
┌──────────────────────────────────────────────────────────────────┐
│  The terminal device determines a second quantity of physical resource blocks │
│   based on the first parameter and the first quantity of physical resource blocks │
└──────────────────────────────────────────────────────────────────┘
                                    ┌──────────┐
                                   ╱│  S303    │
                                  ╱ └──────────┘
┌──────────────────────────────────────────────────────────────────┐
│    The terminal device determines a transport block size TBS based on the    │
│  second quantity of physical resource blocks, where the first parameter is less │
│                         than or equal to 1                          │
└──────────────────────────────────────────────────────────────────┘
```

FIG. 3

S401

A terminal switches to a coverage enhancement mode when receiving first signaling sent by a base station, where the first signaling is used to instruct the terminal to enter the coverage enhancement mode

S402

The terminal receives a first quantity of PRBs that are actually occupied and allocated to the terminal and a physical resource block PRB conversion coefficient that are sent by the base station

S403

The terminal determines, when performing data transmission and based on the first quantity of PRBs and the PRB conversion coefficient that are sent by the base station, a second PRB quantity that is used to query a PRB and transport block size TBS comparison table during the data transmission

S404

The terminal determines, based on the PRB and TBS comparison table, a TBS value corresponding to the second PRB quantity

S405

The terminal performs the data transmission based on the TBS value

FIG. 4

S501

A terminal reports, through capability reporting, a coverage capability condition of the terminal to a base station

S502

The base station receives reporting of the terminal

S503

The base station determines, based on a capability reported by the terminal, whether the terminal can enter a coverage enhancement mode

S504

The base station sends first signaling to instruct the terminal to enter the coverage enhancement mode

S505

The terminal sends a conversion coefficient set to the base station

TO
FIG. 5B

FIG. 5A

CONT.
FROM
FIG. 5A

S506

The base station selects a conversion coefficient suitable for the terminal from the conversion coefficient set, sends the conversion coefficient to the terminal by using second signaling that is sent through a PDCCH, and sends a quantity of PRBs that are actually occupied and allocated to the terminal

S507

The terminal determines a converted quantity of PRBs based on the conversion coefficient and the quantity of PRBs that are actually occupied

S508

The terminal determines, in a PRB and TBS comparison table based on the converted quantity of PRBs, a TBS value corresponding to the converted quantity of PRBs

S509

The terminal performs uplink data demodulation based on the TBS value

FIG. 5B

Base station

First sending module — 601

Second sending module — 602

FIG. 6

Terminal device

Receiving module — 701

Determining module — 702

FIG. 7

Base station

800 Processor

830 Bus interface

810 Transceiver

820 Memory

FIG. 8

Terminal

900 Processor

930 Bus interface

910 Transceiver

920 Memory

FIG. 9

## INTERNATIONAL SEARCH REPORT

International application No.

PCT/CN2017/072656

### A. CLASSIFICATION OF SUBJECT MATTER

H04W 72/04 (2009.01) i

According to International Patent Classification (IPC) or to both national classification and IPC

### B. FIELDS SEARCHED

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 传输块大小, 覆盖, 增强, 资源块, 参数, 系数, 折算, 调制和编码方式, 低, 码率, TBS, coverage, enhancement, PRB, parameter, factor, conversion, MCS, low, code rate

### C. DOCUMENTS CONSIDERED TO BE RELEVANT

| Category* | Citation of document, with indication, where appropriate, of the relevant passages | Relevant to claim No. |
|---|---|---|
| X | CN 105557050 A (QUALCOMM INC.), 04 May 2016 (04.05.2016), description, paragraphs [0069]-[0077] | 1-26 |
| A | CN 104065605 A (CHINA ACADEMY OF TELECOMMUNICATIONS TECHNOLOGY), 24 September 2014 (24.09.2014), entire document | 1-26 |
| A | CN 102550112 A (QUALCOMM INC.), 04 July 2012 (04.07.2012), entire document | 1-26 |
| A | ERICSSON. "TBS scaling for short TTI" 3GPP TSG-RAN WG1 #86 bis, R1-1610344, 14 October 2016 (14.10.2016), entire document | 1-26 |
| A | HUAWEI et al., "TBS determination for short TTI" 3GPP TSG RAN WG 1 Meeting #87, R1-1611877, 18 November 2016 (18.11.2016), entire document | 1-26 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 September 2017 | 28 September 2017 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | BAI, Xuehui Telephone No. (86-10) 62413394 |

Form PCT/ISA/210 (second sheet) (July 2009)

## INTERNATIONAL SEARCH REPORT
Information on patent family members

| | | International application No. |
|---|---|---|
| | | PCT/CN2017/072656 |

| Patent Documents referred in the Report | Publication Date | Patent Family | Publication Date |
|---|---|---|---|
| CN 105557050 A | 04 May 2016 | EP 3047694 A1 | 27 July 2016 |
| | | US 2015085794 A1 | 26 March 2015 |
| | | JP 2016532331 A | 13 October 2016 |
| | | KR 20160058125 A | 24 May 2016 |
| | | WO 2015042396 A1 | 26 March 2015 |
| CN 104065605 A | 24 September 2014 | CN 104065605 B | 05 April 2017 |
| | | WO 2014146507 A1 | 25 September 2014 |
| CN 102550112 A | 04 July 2012 | WO 2011047253 A1 | 21 April 2011 |
| | | JP 2013509037 A | 07 March 2013 |
| | | CN 102550112 B | 27 April 2016 |
| | | EP 2489233 A1 | 22 August 2012 |
| | | TW 201136423 A | 16 October 2011 |
| | | JP 5571192 B2 | 13 August 2014 |
| | | US 2011090808 A1 | 21 April 2011 |
| | | US 9030977 B2 | 12 May 2015 |

Form PCT/ISA/210 (patent family annex) (July 2009)